(19) **Europäisches Patentamt**
**European Patent Office**
**Office européen des brevets**

(11) **EP 4 553 718 A1**

(12) **EUROPEAN PATENT APPLICATION**

(43) Date of publication:
**14.05.2025 Bulletin 2025/20**

(21) Application number: **24211742.2**

(22) Date of filing: **08.11.2024**

(51) International Patent Classification (IPC):
***G06N 10/20*** (2022.01)   ***G06N 10/80*** (2022.01)

(52) Cooperative Patent Classification (CPC):
**G06N 10/20; G06N 5/01; G06N 10/80;** G06N 10/40;
G06N 10/60

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.11.2023 FI 20237188**

(71) Applicant: **IQM Finland Oy
02150 Espoo (FI)**

(72) Inventors:
• **Kotil, Ayse
80992 Munich (DE)**
• **Leib, Martin
80992 Munich (DE)**
• **Simkovic, Fedor
80992 Munich (DE)**

(74) Representative: **Hoffmann Eitle
Patent- und Rechtsanwälte PartmbB
Arabellastraße 30
81925 München (DE)**

(54) **METHOD OF COMPILING A QUANTUM CIRCUIT, A QUANTUM COMPILER, AND A QUANTUM COMPUTER**

(57)    Provided is a computer-implemented method of compiling at least a part of a quantum circuit comprising gates to be performed on logical qubits to a quantum processing unit architecture having physical qubits with restricted hardware connectivity, the method comprising: identifying a mapping between the logical qubits and the physical qubits and compiling an initial subset of the gates of the quantum circuit; and identifying a routing of at least the part of the quantum circuit that iteratively incorporates SWAP gates reducing a distance between an iteration subset of the gates. Provided is also a quantum compiler configured to implement the above method as well as a quantum computer having a quantum processing unit architecture having physical qubits with restricted hardware connectivity, the quantum computer configured to execute a quantum circuit compiled according to the above method.

```
┌──────────────────────────────────────────────────────┐
│  Identifying a mapping between logical qubits and      │
│  physical qubits and compiling an initial subset       │──── S100
│          of gates of the quantum circuit               │
└──────────────────────────────────────────────────────┘
                           │
                           ▼
┌──────────────────────────────────────────────────────┐
│    Identifying a routing of at least part of the       │
│    quantum circuit that iteratively incorporates       │──── S200
│    SWAP gates reducing a distance between an            │
│           iteration subset of the gates                │
└──────────────────────────────────────────────────────┘
```

**FIG. 1**

EP 4 553 718 A1

**Description**

**Technical field**

The present disclosure relates to compiling a quantum circuit comprising gates to be performed on logical qubits to a quantum processing architecture having physical qubits with restricted hardware connectivity. It moreover relates to a quantum compiler for compiling said quantum circuit and a quantum computer for executing said compiled quantum circuit.

**Background**

One prominent model in the technical field of quantum computing is the quantum circuit (QC) model. This model can be seen as a quantum version of the classical circuit model used in classical computing in which quantum operations replace their classical counterparts and qubits (short for quantum bits) replace classical bits.

In a QC, the quantum operations may be represented by gates. In general, a gate (or quantum gate) refers to a fundamental operation that manipulates the quantum state of one or more qubits. The skilled person understands that quantum gates may be represented by matrices, and the application to qubits involves matrix multiplications. When a quantum gate is applied to one or more qubits, it transforms the quantum state of those qubits. Performing a gate on one or more qubits may thus be considered as involving a manipulation of the corresponding quantum state(s) of the qubit(s) according to the specific operations defined by the gate. Further, compiling or transpiling a QC may be considered as a process of converting a high-level quantum algorithm, which may be represented by a QC, into a specific set of elementary quantum gate operations that can be executed on a physical quantum computer hardware, such as a quantum processor, a quantum processor unit (QPU) or the like.

While the QC corresponding to many algorithms may require that any qubit may interact with any other qubit, i.e., requires "all-to-all connectivity", hardware technology may, however, not provide this level of connectivity between the physical qubits. That is, while physical connections between adjacent and connected physical qubits are typically required to execute a two-qubit gate (an example of such a two-qubit gate is the Controlled-NOT gate which can entangle two qubits), physical qubits on a quantum processor or QPU may be connected only through a limited set of fixed couplings. This limited connectivity may thus lead to extra gates and qubit swaps.

For example, one of the currently most prominent examples of such a hardware quantum computing technology are superconducting circuits using superconducting qubits (an example of physical qubits). Here, a superconducting qubit may be connected to another superconducting qubit via a coupling element, such as a microwave circuit, resonator, tunable coupler. Irrespective of the specific degree of freedom within the superconducting qubit chosen as the physical qubit, the overarching hardware structure of the superconducting circuits limits, however, the connectivity between physical qubits to interactions between adjacent physical qubits.

One way to overcome this limitation of the physical connectivity is to insert SWAP gates that swap two quantum states, i.e., two logical qubits. A swap gate is another example of a two-qubit gate that exchanges or swaps the quantum states of two qubits and is useful for rearranging quantum states and for performing operations that require interactions between qubits that are not directly connected (in the hardware).

This process of modifying the QC in such a way that the circuit is compliant with hardware connectivity restrictions by inserting SWAP gates into the QC to allow neighboring interactions, when expanded to the whole QC, is called "routing of a quantum circuit" or "qubit routing" because it may be considered as identifying an appropriate route of one or more qubits through the hardware connectivity of the applied quantum processor in order to perform or execute gates as defined by the QC. While it has been shown in Siraichi et al. "Qubit allocation as a combination of subgraph isomorphism and token swapping", Proceedings of the ACM on Programming Languages, Volume 3, Issue OOPSLA, Article No.: 120, pp 1-29 that an optimal solution, with respect to the number of SWAP gates and the circuit depth, to this qubit routing problem can be found, it has also been shown that the qubit routing problem (mapping a QC to a HW architecture) is non-deterministic polynomial-time (NP)-complete, which requires an exponential runtime (on a classical computer). As qubit routing is a process done on a classical computer as a prerequisite of the quantum computing process on a quantum processing unit architecture with restricted connectivity, an exponential runtime jeopardizes the quantum advantage and thus there is a need for solutions to the qubit routing problem that do not require exponential runtime.

Furthermore, for the qubit routing problem applied to current quantum computing hardware there exist two important quantities.

The first quantity is the number of SWAP gates added to the gates of the quantum circuit to route the qubits. It is preferable that this number of SWAP gates is small since in current quantum computing hardware the implementation of each quantum operation, i.e., each quantum gate, has at least some imperfection and thus may introduce errors into the computing process. Clearly, the more SWAP gates performed, the higher the chance for an error to occur, thus either making the quantum computing process less reliable or requiring quantum error correction. As both reduces the efficiency of the computing quantum process due to the additional resources required, it is preferable that the number of SWAP gates added to the circuit is small.

The second quantity is the circuit depth which may be considered as a measure of how many sequential layers or time stamps are required to execute a QC.

The circuit depth may also be understood as the longest path in the QC. A path in a QC goes from the input, i.e., the qubit before the quantum gates of the quantum circuit are executed, to the output, i.e., the qubit after the quantum circuit gates are executed. The path length of a path in a QC is an integer number and represents the number or sequence of gates executed in that path (sequence of operations that a quantum state undergoes during the execution of an algorithm). It not only counts gates performed on the qubit of that path but also gates of the circuit that have to be performed before gates to performed on the qubit of that path.

The circuit depth is always smaller than or equal to the total number of quantum gates since two (or more) quantum gates that act on disjoint sets of qubits can be executed in parallel and thus, if executed in parallel, add only a value of 1 to the circuit depth. The circuit depth is relevant because it provides an indication of how long the overall computing process takes. As quantum states are generally fragile, decoherence of the quantum states, i.e., the loss of the quantum behavior in the system, limits the time a quantum computing process can take until decoherence makes the result of the quantum computing practically unusable. Since quantum gates on disjoint qubits may be executed in parallel, the number of gates alone provides only one part of the information relevant to assess a qubit routing, thus making the circuit depth another important quantity to take into account when solving the qubit routing problem. As for the number of SWAP gates, also for the circuit depth, it is preferable for this number to be smaller as it generally means a shorter computing process and hence a computing process less prone to errors due to decoherence.

The reliability of quantum gates as well as the decoherence properties both depend on the type of quantum hardware, i.e., the physical system and its degrees of freedom chosen to represent the qubits and the specific implementation of the manipulations corresponding to the quantum gates. Hence, depending on the quantum hardware to be employed, approaches to the qubit routing problem tailored to the specific quantum hardware may lead to good results. Nevertheless, as both increased number of SWAP gates and increased circuit depth introduce additional sources for errors into the quantum circuit, minimizing both is clearly preferable but has to take into account the limited quantum hardware connectivity, as discussed above.

While there exist heuristic solutions to the routing problem with non-exponential runtime, as shown in Li et al. "Tackling the Qubit Mapping Problem for NISQ-Era Quantum Devices", arXiv: 1809.02573, they address or focus on either the circuit depth or the number of SWAP gates. Thus, a heuristic approach that avoids the exponential runtime of the proven optimal solution with respect to the number of SWAP gates and the circuit depth, but nevertheless provides a good solution with respect to these quantities and takes into account the limited quantum hardware connectivity has not been developed yet.

## Summary

The present disclosure has been made in view of the above technical limitations of the currently available solutions to the qubit routing problem and thus provides a method for solving the qubit routing problem in a way that strikes an improved balance between the number of SWAP gates added to the quantum circuit and the circuit depth of the compiled quantum circuit. In that way, a QC can be modified in such a way that it can be executed on a given quantum hardware architecture which is subject to connectivity restrictions (i.e., not all qubits can interact with each other instantly and therefore need to be swapped (routed) first).

According to an aspect of the present disclosure, a computer-implemented method of compiling at least a part of a quantum circuit comprising gates to be performed on logical qubits to a quantum processing unit architecture having physical qubits with restricted hardware connectivity is provided, the method comprising: identifying a mapping between the logical qubits and the physical qubits and compiling an initial subset of the gates of the quantum circuit; and identifying a routing of at least the part of the quantum circuit that iteratively incorporates SWAP gates reducing a distance between an iteration subset of the gates.

According to another aspect of the present disclosure, a quantum compiler configured to implement the above method is provided. The quantum compiler thus appropriately preprocesses a given QC for it to be executed in a quantum computer quantum hardware architecture which is subject to connectivity restrictions.

According to a further aspect of the present disclosure, a quantum computer having a quantum processing unit architecture having physical qubits with restricted hardware connectivity, the quantum computer configured to execute a quantum circuit compiled according to the above method is provided.

In addition, preferred aspects of the present disclosure are defined in the dependent claims.

According to the invention, quantum circuits (QC) with a smaller number of SWAP gates and reduced circuit depths can be compiled and applied in a quantum processing unit (QPU).

## Brief description of the drawings

Embodiments of the present disclosure, which are presented for better understanding the inventive concepts, but which are not to be seen as limiting the disclosure, will be described with reference to the figures in which:

Fig. 1    shows a flow chart for a method of compiling a quantum circuit;

Fig. 2    shows a flow chart of further steps of identifying a routing;

Fig. 3    shows a flow chart of further steps of identifying a mapping between logical qubits and physical qubits;

Fig. 4    shows an illustration of a mapping between logical qubits and physical qubits based on solving a corresponding edge coloring problem;

Fig. 5    shows a flow chart of further steps of applying a swap strategy;

Fig. 6    shows an illustration of a swap iteration based on a maximal matching of the corresponding SWAP gates graph;

Fig. 7    shows a flow chart of further steps of shortening a circuit depth of the compiled quantum circuit;

Fig. 8    shows an example of a method of compiling a quantum circuit applied to a specific problem; and

Fig. 9    shows a comparison of circuit depth and number of swaps of a method of compiling a quantum circuit according to the present disclosure with conventional approaches.

## Detailed description

As the present disclosure relates to the technical field of quantum computing, in particular to a specific problem encountered when using a quantum processing unit architecture having physical qubits with restricted hardware connectivity, the following paragraphs will provide further details regarding the technology referred to and the terms used within this disclosure to facilitate the understanding of the present disclosure and the inventive concepts disclosed therein.

Quantum computing can generally be understood as technically implemented computing based on or exploiting quantum mechanical phenomena. Under certain conditions, in particular at small scales, classical theories of physical matter have to be replaced by quantum theories. One core element of these theories is that physical matter exhibits properties of both particles and waves. Quantum computing is built on the fact that leveraging this behavior can lead to what is a called a "quantum advantage": For some calculations, there exist quantum algorithms that outperform classical algorithms, i.e., algorithms performed on a classical computer, by a substantial margin, in some cases even exponentially faster.

However, quantum computing as understood at present may not replace classical computing in general and for every type of calculation but only for specific technical applications for which a quantum algorithm outperforming known classical algorithms is known. Typical examples thereof include Shor's algorithm for finding prime factors of an integer showing an exponential speedup compared to known classical algorithms and Grover's algorithm for an unstructured search showing a quadratic speedup compared to known classical algorithms, both having a wide range of possible applications. Further fields where quantum computing is expected to outperform classical computing is the field of quantum simulation, i.e., simulating a quantum system by using another quantum system governed by equivalent equations, originally proposed by Richard Feynman as well as specific optimization problems, in particular hybrid algorithms combining quantum computing aspects with classical optimization techniques. These two examples are followed by various industries as they could improve the performance and feasibility of many computationally very demanding tasks such as drug discovery and drug development, logistics as well as engineering.

At the same time, the fragile nature of quantum states leads to the possible computational advantage from quantum computing to be closely tied to a demanding engineering challenge as the quantum behavior of these states has to be preserved for a sufficient amount of time. Due to the presence of noise disrupting the quantum behavior, the number of operations that can be performed on a quantum computer are limited and as a consequence, large-scale algorithms cannot be realized on the currently available Noisy Intermediate-Scale Quantum (NISQ) devices, i.e., devices with non-negligible noise and for which scaling the number of qubits remains a challenge.

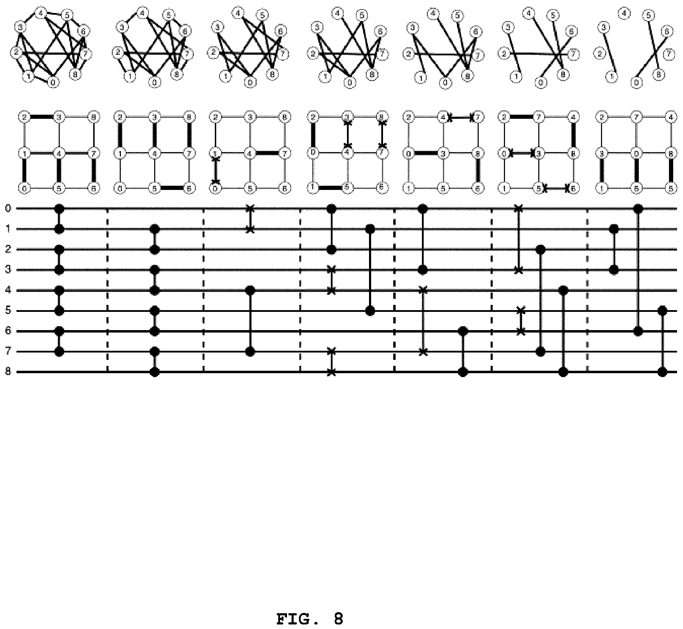

As quantum computing originates in quantum physics, but relates to the field of computer technology, there is a need for a model or representation to bring quantum physics and computer technology together. The model currently most established is the QC model based on the classical circuit model. In the (classical) circuit model, a (classical) circuit is comprised of bits, having either the value 0 or the value 1, to which gates are applied. In the QC model, each of these elements is replaced by its "quantum version". An example of such a quantum circuit is shown in the lower part of Fig. 8, which will be described in more detail later.

The quantum version of the bit is the qubit (also referred to as quantum bit). It is, similar to a classical bit, a two-level (or two-state) system, however, a quantum-mechanical two-level system. As a consequence of quantum physics, a qubit may be in any coherent superposition of both states 0 and 1 simultaneously.

A qubit or quantum bit may be considered as the basic unit of quantum information technology as well as the two-level quantum-mechanical system. It may refer to a physical qubit and/or a logical qubit.

The term qubit can thus refer both to the physical two-level system but also to the basic unit of quantum computing. To avoid confusion between these distinct aspects of the qubit, herein the term "logical qubit" will be used when the basic unit of quantum computing is referred to and "physical qubit" will be used when the hardware implemented quantum-mechanical two-level system is referred to.

A physical qubit may thus be considered as the physical two-level quantum-mechanical system on which physical manipulations may be carried out. Physical qubits can be implemented on different quantum systems, such as superconducting qubits, trapped ion qubits, topological qubits, quantum dot qubits, or the like, that is an actual quantum system used to represent and store quantum information in a quantum computer or quantum information processing device.

A logical qubit may be considered as the basic unit of quantum information technology. A logical qubit may thus be considered as a representation of a qubit that may be encoded or protected using quantum error-correcting codes.

In other words, the logical qubit is a concept of quantum computing to which quantum operations also called quantum gates are applied, while the physical qubit is the actual physical system on which manipulations corresponding to the quantum operations (as defined by the quantum gates) are carried out.

A quantum gate (or simply gate) may be considered as the basic quantum circuit operating on one or more qubits. Depending on whether one refers to the logical qubits or the physical qubits, the quantum gate may thus either refer to an operation on logical qubits, or to an operation in the context of the physical quantum-mechanical two-level system, i.e., a quantum gate operating on the physical qubits (as implemented by hardware).

Quantum gates may operate on a various number of qubits. If it operates only on one qubit, the gate is also called a "single-qubit gate". Accordingly, "two-qubit gates" operate on two qubits. While also gates operating on three or more qubits are possible, for most applications, only single- and two-qubit gates are used.

A SWAP gate may be considered as a two-qubit gate that swaps or exchanges two qubits, i.e., swaps the quantum states of two qubits.

In view of the above difference between logical qubits and physical qubits, it also becomes clear that it is necessary to provide a mapping between the two types of qubits.

A mapping between logical qubits and physical qubits may be considered as a mapping that associates with every logical qubit a physical qubit, and accordingly also vice versa. Such a mapping may thus be considered as an assignment or allocation of logical qubits of a quantum algorithm as represented in a QC to the physical qubits on a physical quantum computer.

This mapping may include to define which physical state of the physical qubit corresponds to which logical state of the logical qubit, and may also include which physical two-level system, i.e., which physical qubit, corresponds to which logical qubit, in particular when discussing quantum hardware systems with a plurality of two-level systems and a quantum circuit with a plurality of logical qubits.

This can be further illustrated when considering the example of superconducting circuits used as the physical system of the physical qubits. Such superconducting circuits may show a variety of quantized degrees of freedom that can be used as the physical qubit. The three most prominent examples are the phase qubit, represented by quantum charge oscillation amplitudes across a Josephson junction, the flux qubit, represented by two integer numbers of magnetic flux quanta trapped in the superconducting ring, and the charge qubit, represented by two integer number of Cooper pairs in the superconducting circuit. Clearly, the manufacture of the specific circuit and its parameters influences the individual degrees of freedom and their practicability as physical qubits.

Hence, if a QC is to be implemented using superconducting circuits, to determine the physical qubit it has first to be decided which type of physical qubit should be used, which two energy levels of the chosen degree of freedom should correspond to the two states of the qubit, and finally which physical qubit of the plurality of superconducting circuits should correspond to which logical qubit of the QC.

This is, in particular, of relevance as quantum computing algorithms typically require a plurality of interactions between logical qubits on which quantum gates can be performed, while the physical systems at present typically provide less connections between physical qubits on which corresponding operations implementing these quantum gates can be realized, i.e., the hardware connectivity restrictions, as discussed above.

This can be further illustrated when considering the example of the superconducting element (superconducting circuits)used as the physical system. As discussed, the physical qubit is realized by a degree of freedom of an individual superconducting element, wherein a plurality of superconducting elements and respective coupling elements (microwave circuits, resonators, tunable couplers) are manufactured on a chip. Consequently, the superconducting elements themselves cannot be moved and moreover also the limited interactions between the superconducting elements, and hence the physical qubits and their interactions are limited by the layout and fixed coupling elements of the chip. Due to the nature of these interactions, only adjacent superconducting circuits can interact with each other and hence the physical qubits are limited to nearest-neighbor-interactions.

On the other hand, many quantum algorithms require interactions between most of the logical qubits. For example, the quantum Fourier transform, which is an important building block of Shor's algorithm requires that each logical qubit interacts with each other logical qubit. Further, the quantum approximate optimization algorithm discussed in further detail below requires, depending on the particular optimization problem to be solved, interactions going beyond nearest-neighbor-interactions.

While quantum computers operating with trapped ions or ultra-cold atoms allow for the physical qubits to be physically shuffled around, this process takes up significant time which may affect the quantum computing process as well.

In other words, in view of current quantum processing unit architectures having physical qubits with restricted hardware connectivity, additional technical considerations have to be taken into account on how to map the logical qubits onto the physical qubits and how to overcome the restricted connectivity of the physical qubits.

One approach for addressing the second part of overcoming the restricted connectivity of the physical qubits is to include SWAP gates that swap or exchange two quantum states, i.e., two logical qubits, into the quantum circuit to make the execution of gates between non-neighboring physical qubits possible, in other words adding additional operations to be executed on the physical qubits to overcome the restricted connectivity of the physical qubits. In this way, hardware restrictions may be overcome as the correct choice of SWAP gates can establish the desired logical connectivity even on restricted hardware. This process is known as "qubit routing" (as the qubits are "routed" among the quantum processing architecture).

Qubit routing may thus be considered as inserting SWAP gates into a set of gates during compiling said set of gates such that the restricted hardware connectivity of the quantum processing unit architecture is overcome.

Further, the mapping between physical qubits and logical qubits prior to routing the qubits may be considered as qubit mapping (or qubit allocation) and may be subject to a combinatorial number of degrees of freedom of the problem addressed and the architecture used.

Since these two problems, the mapping and the routing, are closely connected to each other as the mapping influences the possible solutions to the routing problems, the problem as a whole is also referred to as the "qubit routing problem".

Accordingly, to bring, in particular, QCs closer to practicability, it is necessary that the qubit routing and/or qubit mapping are performed efficiently in terms of the resulting quantum circuit, i.e., the number of added SWAP gates and the resulting circuit depth, and as well as the classical runtime necessary to solve these problems. One promising application of quantum computing, in particular in NISQ devices, is based on the Quantum Approximate Optimization Algorithm (QAOA), which is a quantum algorithm used to tackle combinatorial optimization problems. Combinatorial optimization problems have a vast range of use cases in industrial and research fields and many thereof remain unsolvable for classical computers due to their need for exponential runtime resources. Further, the QAOA is considered to be a promising candidate for near-term quantum computer applications due to its shallow circuit depth, in particular on NISQ devices.

The QAOA provides approximate solutions for combinatorial optimization problems, i.e., a class of problems where the solution is a bit-string satisfying clauses of logical Boolean expressions subject to an objective function. An exhaustive search through all possible bit-strings results in an exponential runtime, making the problem intractable for classical computers and hence a good candidate for quantum computing.

The QAOA has its roots in the Quadratic Unconstrained Binary Optimization (QUBO) problem. Consider an $N$-node graph $G = (V, E)$ with vertices $V = \{v_1, \ldots, v_N\}$ and edges $E \subseteq \{e_{ij} = (v_i, v_j) \mid v_i, v_j \in V\}$, $w_{ij}$ being the weight associated with edge $e_{ij}$. Then QUBO problem is defined as

$$\min_{x_i = 0,1} \sum_{i,j \in [N], i \neq j} w_{ij} x_i x_j + \sum_{i \in [N]} w_{ii} x_i$$

(1)

This problem can be mapped onto an Ising model

$$H = \sum_{i<j} J_{ij}\sigma_i^z\sigma_j^z + \sum_{i<j} h_i\sigma_i^z$$

$$(2)$$

by setting $\sigma_i^z \to 2x_i - 1$ and mapping each problem variable $x_i$ to a qubit, i.e., $\sigma_i^z$ refers to a Pauli-matrix. The constants $J_{ij}$ and $h_i$ then correspond, subject to the above mapping, to $w_{ij}$ and $w_{ii}$, respectively. Thus, finding the ground state of the Ising Hamiltonian leads to a solution of the QUBO problem.

This can be done using the adiabatic theorem, according to which a system initialized in its ground state remains in this ground state if evolved adiabatically. In other words, if a system is prepared in the ground state of a known Hamiltonian $H_0$ and then evolved in time such that the final Hamiltonian is a Hamiltonian $H_p$ corresponding to the QUBO problem mapped onto a Hamiltonian as above and the conditions of the adiabatic theorem are met, the final state of the time evolution will be the ground state of the Hamiltonian $H_p$, thus providing a solution to the QUBO problem.

More specifically, a time-dependent Hamiltonian

$$H(t) = \left(1 - \frac{t}{T}\right)H_0 + \frac{t}{T}H_p$$

$$(3)$$

initialized at time $t = 0$ in the ground state of $H_0$ and evolved until $t = T$ will evolve into the ground state of $H_p$ and thus provide a solution to the QUBO problem, assuming that the conditions of the adiabatic theorem are met. Oftentimes, the choice

$H_0 = -\sum_i \sigma_i^x$ is made for a convenient initial ground state preparation.

As the time evolution generated by a Hamiltonian is a unitary operator, the time evolution of H(t) can be implemented by a composition of unitary operators approximating the full time evolution: $U(H_P, \beta_d)U(H_0, \gamma_d)...U(H_P, \beta_1)U(H_0, \gamma_1)$, where $U(H_P, \beta_d) = exp(-i\beta_k H_P)$ and $U(H_0, \gamma_d) = \exp(-i\gamma_k H_0)$. Here, $d$ is the number of repetitions regulating the approximation accuracy and the parameters $\gamma_d, ...\gamma_1$ and $\beta_d, ... , \beta_1$ are classically optimizable real numbers that can iteratively be updated and fed back into the circuit via a feedback process.

In other words, the QAOA is an approximate time evolution of $H(t)$ exploiting the adiabatic theorem of an Hamiltonian that can be mapped onto the QUBO problem and hence can provide an approximate solution to the QUBO problem.

Further, for the routing problem of this particular problem only multi-qubit gates are relevant since single-qubit gates do not require physical interaction with another qubit and hence connectivity of the physical qubits is irrelevant for these gates. Moreover, the particular case of the Hamiltonian onto which the QUBO problem is mapped has only one type of two-qubit interaction, namely in the Hamiltonian $H_p$ since there is only one type of two-qubit interaction in this Hamiltonian, which corresponds to a $R_{ZZ} = \exp(-i \sigma^z \sigma^z)$ gate. Accordingly, all multi-qubit gates in the QAOA circuit commute, i.e., their order can be exchanged without any influence of the outcome of the computing. In addition, optimizing one block of the $d$ unitary operators solves the complete problem as it can then simply be repeated $d$ times.

A QAOA circuit may be considered as a circuit implementing a quantum approximate optimization algorithm.

The qubit mapping problem and the qubit routing problem applied to QAOA circuits exhibit a large search space (e.g., larger than $10^6$) since QAOA circuits are comprised of two-qubit gates commuting with each other. This latter aspect can be exploited because any gate interaction to route next may be selected, which may provide an interaction order that introduces a small amount of swap overhead. As a consequence, in QAOA circuits, the set of gates of the quantum circuit is defined, but the order of the gates is not. Hence, the number of possible configurations is much larger compared to a circuit without this property as it scales with the factorial of the number of logical qubits. While this makes the qubit routing problem more challenging, it also presents an opportunity to save gates and run time by finding an appropriate routine that picks favorable sets of gates depending on the layout of qubits.

Quantum computing, due to its proximity to computer science, oftentimes relies on algorithms, in particular from applied graph theory, for finding the technical solution providing the technical advantage over conventional approaches. This can, in particular, be seen when considering that quantum computing aims at providing technical means to perform calculations that cannot be performed on classical devices or can at least not be performed as efficiently on classical devices.

One algorithm of applied graph theory referred to in the present disclosure is edge coloring. Edge coloring of a graph $G_P$ is an assignment of edges to colors such that no adjacent edges are assigned the same color. A minimum edge coloring is an edge coloring with the smallest possible color set. Finding such a minimum edge coloring is also referred to a solving the edge coloring problem. While finding an edge-color mapping with the minimum number of required colors is itself an NP-hard problem, the skilled person knows however polynomial-time algorithms which guarantee a coloring with at most degree $(G_P)+1$ colors that can be applied here.

Another aspect of applied graph theory referred to in the present disclosure is matching. A matching of a graph is a set of tuples representing edges where a vertex may appear at most once in the set, i.e., the tuples contain pairwise non-adjacent edges. A tuple may be considered a finite sequence or ordered list of mathematical objects. A maximum matching is a matching with the maximum cardinality, i.e., a matching containing the maximum number of non-adjacent edges. A maximum matching is not necessarily unique. A maximal matching is a matching that is not a subset of another matching, i.e., a maximal matching cannot accept another edge and still be a matching. Every maximum matching is a maximal matching, but not vice versa. A maximal matching can be obtained by traversing the edges of the graph randomly and adding them to a set if none of their vertices are already contained in the set. While finding a maximum matching is an NP-complete problem, there exist algorithms to find approximate solutions in polynomial time.

Using the above, the following describes embodiments of the present disclosure in detail.

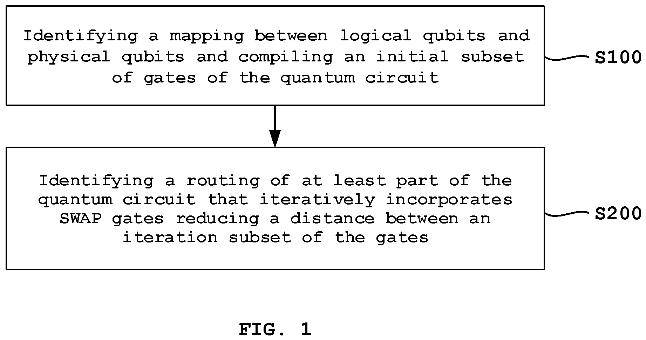

**Fig. 1** shows a flow chart for a method of compiling a quantum circuit, more in detail a flow chart for a classical computer-implemented method of compiling at least a part of a quantum circuit comprising gates to be performed on logical qubits to a quantum processing unit (QPU) architecture having physical qubits with restricted hardware connectivity. The method comprises the steps of identifying a mapping between the logical qubits and the physical qubits and compiling an initial subset of the gates of the quantum circuit (S100); and identifying a routing of at least the part of the quantum circuit that iteratively incorporates SWAP gates reducing a distance between an iteration subset of the gates (S200). Here, incorporating SWAP gates means incorporating SWAP gates into the compiled quantum circuit.

Compiling may be applied on the level of compiling a quantum circuit or a part thereof to a quantum processing unit architecture having physical qubits, in which case it may include considering the restricted hardware connectivity of the quantum processing unit architecture. Compiling may also be applied on the level of compiling a gate as the single gate may be seen as quantum circuit consisting of only one gate.

In other words, the method first provides a mapping of the logical qubits onto the physical qubits and compiles an initial subset of gates, thereby providing a solution to the qubit mapping problem, and then iteratively identifies a routing of the remaining gates, the remaining gates being the ones that have not been compiled yet, thereby providing a solution to the qubit routing problem. More precisely, the remaining gates can be the iteration subset of the gates.

According to the first step, performed by a mapping module of a quantum compiler, a suitable initial mapping or initial qubit placement (initialization of quantum states on the physical hardware) is thus found such that a first layout of qubits allows immediate execution of an initial subset of gates (interactions). In other words, the initial subset of gates is related to those qubits that are already neighbors in the QPU hardware after the initialization and do not need to be routed. A graph-based algorithm may be used for finding the parallelizable interactions, like the edge coloring algorithm, as will be detailed below. That is, based on the mapping between logical and physical qubits, the initial subset of gates may be chosen such that these gates can be compiled directly without further SWAP gates to be added to the compiled circuit.

Compiling the initial subset of gates may therefore include converting the initial subset of gates of the QC, without inserting SWAP gates, into a specific set of elementary quantum gate operations for the initial subset that can be executed on the physical quantum computer hardware (such as a quantum processor, a quantum processor unit (QPU) or the like).

According to the second step, following the initial mapping and applying/compiling the immediately executable initial subset of the gates, a routing module of the quantum compiler is identified and it performs an iterative procedure in which, in each iteration, one or more SWAP gates are introduced into the (remaining) QC having an iteration subset of gates, i.e. a remaining number of gates after each iteration, or, in other words, a subset of the set of gates not yet compiled into specific hardware operations.

Here, reducing a distance between an iteration subset of the gates means, in other words, that the incorporation of one or more SWAP gates reduces a physical distance (interaction distance) of the corresponding qubits on the QPU. That is, the incorporation of a respective SWAP gate brings the corresponding qubits closer together on the QPU. The physical distance between pairs of qubits may be tracked, for example as a weight between corresponding vertices in a problem graph, as will be described further below.

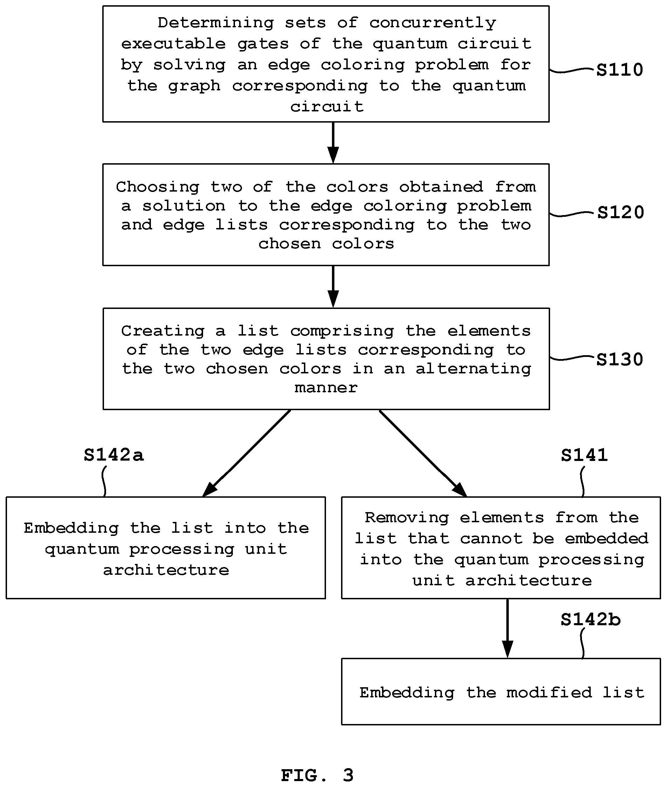

This incorporation of the one or more SWAP gates in each of the iteration subset is thus based on a distance related SWAP-based search algorithm. In contrast to prior art solutions, as in Weidenfeller et al. "Scaling of the quantum approximate optimization algorithm on superconducting qubit based hardware"; arXiv: 2202.03459; Figure 3, which do not take the interaction distance between the qubits on the QPU into account and apply a predefined fixed set of swap layers until all interactions are completed, the present SWAP-based search algorithm takes into account the current distances between the interactions on the QPU and swaps qubits accordingly. While the conventional swap network thus introduces many SWAP gates but results in a shallow circuit depth, the preferred SWAP-based search algorithm produces significantly less SWAP gates and a comparable circuit depth, in particular for sparse problem graphs.

The preferred SWAP-based search algorithm is based on finding the maximum number of swaps that can be executed in parallel, using underlining graph structure of qubit interactions and extracting the maximum matching of its graph. In particular, a corresponding graph may be consisting only of physical qubits that once swapped with each other, give an overall positive distance change in the current configuration of qubits (those swaps bring qubits closer to each other in the QPU) . By finding the maximum matching of that graph, the swaps that can be executed in parallel and at the same time result in the largest positive change. This approach is the key to obtaining a small number of SWAP gates and a shallow circuit at the same time.

After each iteration, the method may scan through all present gates, compile the gates immediately executable, then update the remaining gates, and apply the SWAP strategy.

It is noted that the overall solution of the method is a compiled quantum circuit that is adapted to the quantum processing unit architecture and its hardware restrictions. This compiled quantum circuit can then be executed on said quantum processing unit architecture, e.g., on a quantum computer with a quantum processing unit having said architecture. Thus, the proposed method is an indispensable aspect of performing quantum computing on hardware with restrictions on the interactions that can be implemented between the physical qubits.

The distance between the iteration subset of gates may be a sum of shortest path lengths in the hardware connectivity between pairs of the physical qubits corresponding to the iteration subset of the remaining, after each iteration, gates in the QC, corresponding to remaining edges in the problem graph.

In other words, the iteration subset of gates mapped onto the physical qubits and their (restricted) hardware connectivity is considered and the path lengths between the physical qubits involved in each individual gate of the iteration subset of gates are considered and summed. Clearly, it is advantageous to consider the shortest path between two physical qubits subject to a gate when aiming at keeping the number of additional SWAP gates and the increased circuit depth at a minimum.

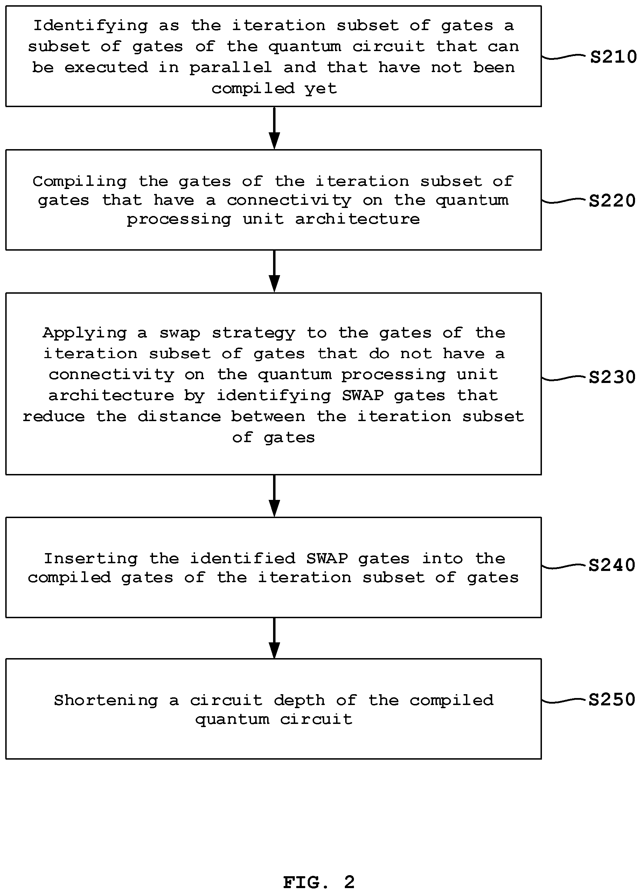

Fig. 2 shows a flow chart of further steps of identifying a routing. In more detail, Fig. 2 shows that the step of identifying the routing may comprise: a) identifying the iteration subset of gates as a subset of gates of the quantum circuit that can be executed in parallel and that have not been compiled yet (S210), b) compiling the gates of the iteration subset of gates that have a connectivity on the quantum processing unit architecture (S220), c) applying a swap strategy to the gates of the iteration subset of gates that do not have a connectivity on the quantum processing unit architecture by identifying SWAP gates that reduce the distance between the iteration subset of gates (S230) and d) inserting the identified SWAP gates into the compiled gates of the iteration subset of gates (S240), and e) shortening a circuit depth of the compiled quantum circuit (S250).

It is noted that these steps are not dependent on each other and may be implemented only in parts. In other words, the present disclosure also covers methods in which only step a), only step b), only steps c) and d), only step e) or any combination thereof is part of the method.

The iteration subset of gates identified in step a) may minimize the distance on a graph corresponding to the hardware connectivity restrictions of the quantum processing unit architecture.

A graph $G_{QPU}$ corresponding to the hardware connectivity restrictions of the quantum processing unit architecture means a graph whose vertices are the physical qubits and edges between two vertices exist if and only if there is a direct connectivity between the associated physical qubits in the quantum processing unit architecture.

A distance between two vertices in a graph, such as the graph corresponding to the hardware connectivity restrictions of the quantum processing unit architecture, is the number of edges in a shortest path connecting the two vertices.

In other words, since the iteration subset preferably only contains disjoint gates, i.e., not a set of gates including a logical qubit more than once, the iteration subset is not necessarily unique but can be chosen differently. Accordingly, identifying those gates of the quantum circuit that are closer to each other in view of the hardware connectivity restrictions may allow to further reduce the number of added SWAP gates and the circuit depth.

The gates of at least part of the quantum circuit may commute with each other. Further, the quantum circuit may be a quantum approximate optimization algorithm, QAOA, circuit in which 2-qubit gates commute with each other.

As indicated above, commuting gates of the quantum circuit substantially increase the number of possible solutions to the qubit routing problem, but also open the possibility to find a particular advantageous solution to the very same problem such that the methods described herein may be applied particularly efficiently to such quantum circuits.

The restricted hardware connectivity may relate to restrictions in the connectivity between the physical qubits. More specifically, there may be no all-to-all connectivity between the physical qubits. Furthermore, the interactions may be restricted to interactions between neighboring qubits or may be restricted to interactions between next-to-nearest neighboring qubits. Herein, neighboring qubits may refer to physical qubits that are adjacent to each other, i.e., there is a (direct) connection between the qubits not crossing a third qubit; accordingly, next-to-nearest neighboring quits may refer to physical qubits whose connection involves crossing one additional physical qubit.

This restricted hardware connectivity is not limited to a particular physical realization of the physical qubits and may be applied to any quantum computing architecture having such restrictions. Moreover, even in systems in which the physical qubits can be moved and exchanged, such as trapped ions or ultra-cold atoms systems, one may prefer to include SWAP gates instead of moving the physical qubits to implement the quantum circuit. Reasons for this may be that the operation of swapping physical qubits may be prone to errors and/or take relatively long, thus possibly introducing noise into the system. Hence, even for system in which hardware restrictions may be circumvented by measures different from routing the qubits, it may be beneficial to perform qubit routing over swapping the physical qubits as it may introduce less noise and/or errors into the system.

In addition, in step c) the SWAP gates minimizing the distance between the subset of gates may be identified. In the present disclosure, "minimize" can be understood to be encompassed in "reduce" and hence minimizing a distance is understood as a further concretization of reducing a distance.

Moreover, steps a) to d) may be repeated until all gates of at least the part of the quantum circuit are compiled. In other words, the methods according to the present disclosure can be understood as an iterative procedure of routing the qubits.

Fig. 3 shows a flow chart of further preferred steps of identifying a mapping between logical qubits and physical qubits.

In more detail, Fig. 3 shows that identifying a mapping between the logical qubits and the physical qubits may include: determining sets of concurrently executable gates of the quantum circuit by solving an edge coloring problem for the graph corresponding to the quantum circuit (S110), choosing two of the colors as well as edge lists corresponding to the two chosen colors obtained from a solution to the edge coloring problem (S120), creating a list comprising the elements of the two edge lists corresponding to the two chosen colors in an alternating manner (S130), and if the quantum processing unit architecture allows it, embedding the list into the quantum processing unit architecture (S142a), else removing elements from the list that cannot be embedded into the quantum processing unit architecture (S141), thereby creating a modified list and embedding the modified list (S142b). It is noted that if an element is removed from the list, this element is returned to the set of elements that still have to be processed. In other words, removing an element does not mean that the element is discarded or removed from the quantum circuit, but rather that it will be processed at a later stage.

In other words, by transferring the problem of how to map the logical qubits to physical qubits onto a known problem of applied graph theory, a mapping can be found that also allows to identify a subset of the gates of the quantum circuit that can be compiled without the need for SWAP gates.

The two colors chosen may be the colors with the largest edge lists. Accordingly, the amount of parallelization can be further increased, and a more efficient qubit mapping can be found. The edge list, in the context of the edge coloring problem, refers to a list of edges associated to the same color. These edge lists can be sorted by the number of its elements.

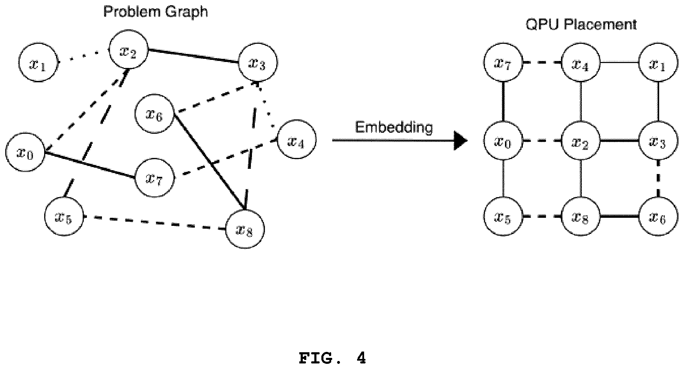

Fig. 4 shows an illustration of a mapping between logical qubits and physical qubits based on solving a corresponding edge coloring problem. Fig. 4 shows an example of the initial embedding step of the mapping.

An edge coloring of the problem graph, shown on the left of Fig. 4, is performed. This edge coloring is shown by the different line styles (solid, short dashed, long dashed and dotted). Subsequently two colors, that is, line styles, are chosen, which together form a chain, which can be embedded into the square QPU hardware connectivity graph shown on the right side of Fig.4, as long as a Hamiltonian path through the graph exists. A Hamiltonian path is a path within a graph which visits each vertex or node of the graph only once. Specifically, as shown on the right of Fig. 4, the colors represented by the solid lines and by the short dashed lines are chosen. Consequently, all interactions from these two colors can be parallelly implemented in the first two circuit layers without the necessity for any swap operations. While this illustrative example uses 2 colors, the skilled person understands that this is not limiting, and a different number of colors may be used.

On the left side, Fig. 4 shows a problem graph for a set of nine logical qubits $x_0, ... x_8$ represented as vertices and an edge between two logical qubits representing that the quantum circuit includes an interaction between these two qubits. The skilled person understands that the problem graph $G_P$ can be derived from the underlined QUBO algorithm, see above Eq. (2), by mapping the QUBO problem variables $x_i$ to graph vertices and variable interactions to edges.

In particular, the problem graph may correspond to the given QUBO problem, where every edge is induced by a QUBO interaction between two variables. In addition, every edge connecting two variables may store the distance information between the corresponding physical qubits the variables are assigned to prior to the routing. The distance information of an edge is updated if one of the physical qubits is swapped. By contrast, the QPU connectivity graph $G_{QPU}$ is a graph of the QPU topology where vertices are the physical qubits and an edge between two vertices exists if and only if the corresponding physical qubits are nearest-neighbors on the QPU, as shown in Figure 4, right.

In other words, the quantum circuit corresponding to Fig. 4 includes interactions between the qubit pairs $\{x_0, x_2\}$, $\{x_0, x_7\}$, $\{x_1, x_2\}$, $\{x_2, x_3\}$, $\{x_2, x_5\}$, $\{x_3, x_4\}$, $\{x_3, x_8\}$, $\{x_4, x_7\}$, and $\{x_5, x_8\}$, as may be defined by the QUBO algorithm. Fig. 4 further shows a solution to the edge coloring problem for this problem graph indicated by the four different line styles connecting the vertices. It is apparent that the dash-dotted lines each only connect four vertices, while the solid lines and the dashed lines connect six resp. eight vertices.

Once a coloring of $G_P$ is found, a predetermined number (for example, two) of the colors and their respective edge lists are extracted. Next, two colors may be chained or concatenated together into a list in an alternating manner, i.e. $C = \{(v_0, v_1), (v_1, v_2), ..., (v_{2k}, v_{2k+1})\}$ for all vertices. Such a chain will either be a closed loop or a single line. In the case of a loop, the chain may be broken at an arbitrary qubit pair. In the case of multiple independent components of the induced subgraph resulting from these two colors, they can all be connected in a single chain. Finally, the chain may be embedded into the QPU hardware layout. For example, on a square grid QPU, the embedding may start with the bottom row of physical qubits and propagates to the top from right to left and vice versa, resulting in a continuous snake pattern. For QPU's where embedding of a chain is not possible (e.g., for tree graphs or the like) such an embedding may be found by allowing for a minimal number of additional connections. Qubit interactions on qubits with these connections then cannot be implemented and have to be placed back into the set of remaining interactions.

Then, embedding (or allocation of) the logical qubits onto the available physical qubits of the exemplary physical square grid QPU shown on the right side of Fig. 4 may be done in such a way that the initial mapping allows for two parallel layers of gates to be executed directly. On the right side of Fig. 4, the gates between $x_7$ and $x_0$, $x_2$ and $x_3$, $x_8$ and $x_6$ (according to the solid lines in the problem graph, i.e. one color) as well as the gates between $x_7$ and $x_4$, $x_0$ and $x_2$, $x_5$ and $x_8$, $x_3$ and $x_6$ (according to the short dashed lines in the problem graph, i.e. another color) can be executed directly as they correspond to neighboring and connected physical qubits. This is advantageous as a large number of interactions can be compiled from logical qubits into physical qubits without the need for inserting SWAP gates. In line with the above discussion, the interactions corresponding to the solid lines and the dashed lines can be compiled within two layers without adding any SWAP gates into the compiled quantum circuit.

The initial mapping therefore preferably determines that (i) after the initialization, every qubit is neighboring another qubit it has to interact with and (ii) the number of parallel interactions executable within the first layer of the circuit is maximized.

The executed gates are preferably removed from the interaction set in the problem graph. The reduced interaction set may be subject to another edge coloring (or, alternatively, a maximal matching) to obtain a new set of independently executable gates. Here, the routing module may take the (reduced) interaction set as input and decide, as explained, which of the SWAP gates are to be implemented.

Based thereon, the routing may thus use the problem graph $G_P$ and the QPU connectivity graph $G_{QPU}$ as input. Here, the physical distance between pairs of qubits may be tracked, for example as a weight between corresponding vertices in the problem graph. The routing then preferably comprises the following iterative steps:

1) The routing takes as input a subset of parallelizable two-qubit gates and will gradually proceed with adding the remaining qubit interactions into the subset according to an update strategy.
Here, the update strategy may include steps that aim to replace interactions in an interaction set. As the routing proceeds, it may be of advantage to exchange some qubit pairs in the current interaction set that are still far away from each other in the QPU. The replacement should be a qubit pair with a smaller distance than some other pair in the interaction set. In order to achieve this, it may be iterated through every qubit that is involved in an interaction set and check the neighbors of its respective vertex in the problem graph. The neighbor with the minimal distance W on the hardware graph $G_{QPU}$ may be selected, i.e. the partner with the smallest distance to the vertex.

2) Execute all possible gates which have a valid connectivity on the QPU and remove them from the problem graph. Here, a removal may trigger additions to the interaction set if applicable. When an interaction pair is routed successfully, its qubits become available for a further pair selection in the compilation. The interaction pairs involving the two qubits may be searched through, and the ones with the minimum current distance may be identified and added to the interaction set.

3) For all the gates which do not have a valid connectivity on the QPU, apply the swap strategy using the interaction distance-based swap search algorithm.

4) Repeat 1)-3) until the problem graph is empty.

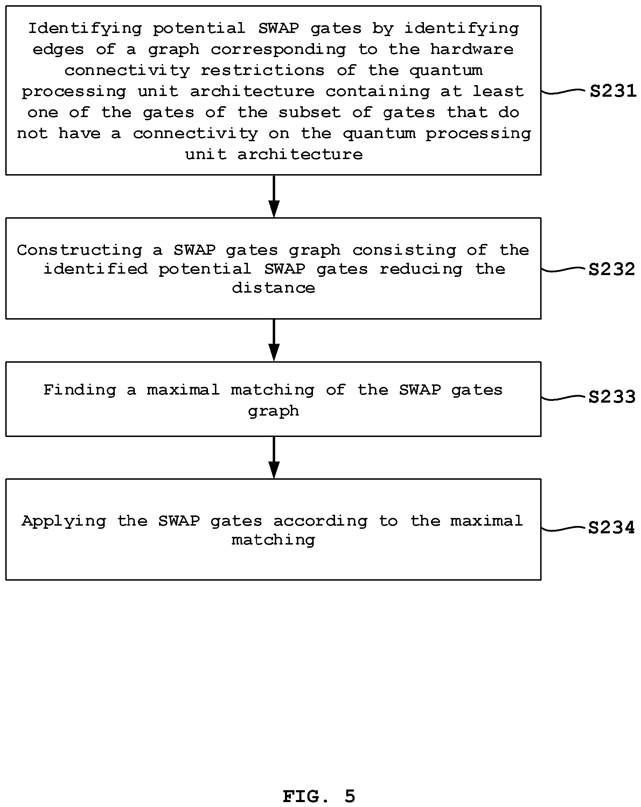

Fig. 5 shows a flow chart of further steps of applying a swap strategy, in more details shows that step c) may further comprise the steps of: identifying potential SWAP gates by identifying edges of a graph corresponding to the hardware connectivity restrictions of the quantum processing unit architecture containing at least one of the gates of the subset of gates that do not have a connectivity on the quantum processing unit architecture, constructing a SWAP gates graph consisting of the identified potential SWAP gates reducing the distance, finding a maximal matching or a maximum weight matching of the SWAP gates graph, and applying the SWAP gates according to the maximal matching or the maximum weight matching.

When a maximum weight matching is used, the graph would be a weighted graph, wherein the weights could be determined on the basis of the reduction of the distance achieved by the corresponding SWAP gates. Using the maximum weight matching may thus be understood as effectively prioritizing SWAP gates that yield a higher reduction of the distance. However, other types of weights could be used to perform a maximum weight matching.

In other words, the selection of SWAP gates added to the quantum circuit is based on considering SWAP gates that bring two qubits, on which a two-qubit quantum gate is to performed, closer to each other and finding an optimal subset of those gates. As done in an aspect of the present disclosure, concepts from graph theory can be used to structure, analyze and solve the underlying problem and find a solution. Specifically, here a graph based on the quantum processing unit architecture and its hardware connectivity restrictions, further limited to the gates of the iteration subset, is considered with the objective to maximize the number of swaps that can be executed at the same time (thereby keeping the circuit depth small) while considering only those swaps that bring the relevant qubits closer together.

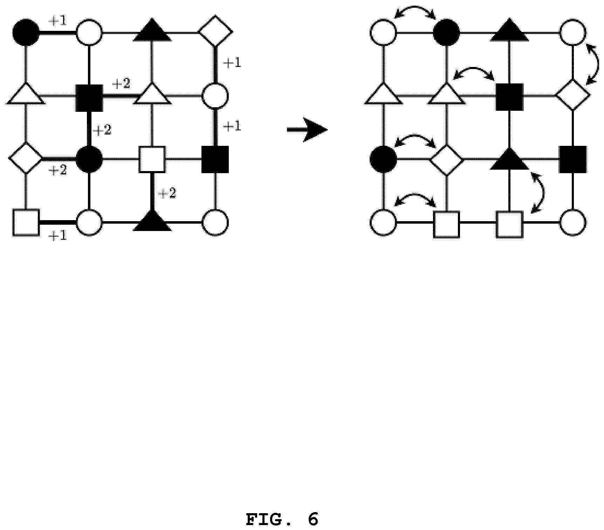

Fig. 6 shows an illustration of a swap iteration based on a maximal matching of the corresponding SWAP gates graph. Specifically, the left-hand side of Fig. 6 shows logical qubits paired by gates by a common solid symbol and the empty circles indicate qubits that are not included in the iteration subset of gates. Further, the numbers "+1" and "+2" indicate by how much a SWAP of the two qubits adjacent to the respective number would reduce the distance. For example, swapping the solid circle and empty circle qubit in the top left brings the solid circle qubit closer to the other solid circle qubit, but swapping the empty circle qubit does not affect the distance since it is not included in the iteration subset of gates. Hence, this swap is attributed "+1". Similarly, swapping the empty diamond qubit and the solid circle qubit on the lower part of the left side brings both qubits closer to their respective counterparts and hence this swap is attributed with "+2".

This illustration does not show all possible swaps but only shows those swaps that bring qubits closer to their respective qubit according to the interactions in the iteration subset of gates. It does, in particular, not show any swaps that have no effect or a negative effect on the overall distance among the logical qubits in the iteration subset. This is, in particular, the case for swaps that bring one qubit closer to its interaction counterpart and distance the other qubit from its interaction counterpart or for swaps that do not affect qubits that are related to the iteration subset of gates, i.e., have no effect, and for swaps that distance both qubits from their interaction counterpart or swaps that distance one qubit from its counterpart and do not affect the other qubit, i.e., have a negative effect.

Further, not all swaps that improve the situation, i.e., are attributed with a positive number, can be executed at the same time, see for example the empty diamond, empty circle and solid square on the left side. These two swaps, both attributed "+1" would swap the empty circle qubit and thus cannot be performed at the same time. Hence, only one of the swaps can be performed.

The step of finding a maximal matching discussed above ensures that the swaps performed minimize the distance between the relevant qubits, i.e., maximize the effect of the SWAP gates.

A possible solution to the configuration on the left-hand side of Fig. 6 is shown on the right-hand side of Fig. 6, where the two-headed arrows show the swaps performed and the qubits are shown at their swapped place. For the sake of completeness, we note that, in line with the disclosure as a whole, "swapping the qubits" refers to an operation in which not the physical qubits themselves, but the quantum states of said qubits are swapped. In terms of superconducting circuits manufactured on a chip representing the physical qubits, this can be understood easily: It is not the superconducting circuits that are moved as they are fixedly manufactured but rather the quantum states of the superconducting circuits are swapped.

In a preferred embodiment, a swap strategy may be based on defining a total distance D in the interaction set by the sum of the shortest path lengths between the interaction pairs that are contained in the interaction set. When two qubits are swapped on a QPU (by incorporation of a SWAP gate), it holds for the new distance $D'$ that $|D' - D| \leq 2$. There are 5 possible outcomes:

1) and 2) Both of the swapped qubits are in the interaction set and they move closer to (further apart from) their partners, i.e. $D' - D = 2$ ($D' - D = -2$).

3) Both of the swapped qubits are in the interaction set and one of them moves closer to its partner, whilst the other one moves further away, i.e. $D' - D = 0$. Alternatively, one can have $D' - D = 0$ if none of the swapped qubits are in the interaction set.

4) and 5) Only one of the qubits is in the interaction set and it moves closer to (further apart from) its partner, i.e. $D' - D = 1$ ($D' - D = -1$).

Ideally, the routing algorithm should only execute swaps that result in a positive distance change which may also be referred to as positive swaps. Finding a maximum matching from the possible positive swaps has the objective of maximizing the total change of distance between interacting gate pairs that can be executed in parallel in order to reduce the overall circuit depth. Hence, the swap strategy preferably comprises the following steps:

1) Find swap candidates by traversing through the edges of $G_{QPU}$. Only the edges containing at least one of the interacting qubits need to be considered, since swapping qubits which are not contained in interaction set leave the total distance D unchanged.

2) Construct a swap graph $G_{SWAP}$ consisting only of positive swaps.

3) Find a maximal matching of $G_{SWAP}$

4) Apply the swaps found by the maximal matching.

An example for a $4 \times 4$ square QPU is shown in Fig. 6. Here, qubit pairs are indicated through matching colors and all swap candidates with a positive swap score are highlighted by thick edges. On the right side of Fig. 6 the result of the edge coloring is shown, i.e. arrows show all swaps which have been be applied and the qubit colors show the resulting configuration.

Attention may be given to a number of corner cases involving pairs of swap candidates which cancel each other's positive or negative effect. This can happen if they both change the distance of the same qubit pair. For simplicity, a square QPU connectivity graph may be considered. Then, if the horizontal or vertical distance between a pair of qubits is exactly one, then separately applying swaps acting on both qubits in that given direction will have no net effect on their distance. To avoid this issue swaps may be applied from the maximal matching one by one and an additional check of whether a given swap is still positive before implementing it may be performed.

Another case concerns pairs of swap candidates which act on a qubit pair with a horizontal or vertical distance of zero (meaning they are located in the same row or column of the square QPU graph). Here, it can happen that, individually, both swap candidates in the given direction have a score smaller than +1, but if applied together their score becomes positive because the negative effect on the qubit pair cancels out. To this end, it is possible to additionally check for such swap candidate pairs (with swap scores 0/0 or -1/0) after having applied all the positive swaps from the maximal matching. If all four qubits involved in the swaps have not been utilized in a given swap layer, one then implements the pair of swap candidates.

After the swapping, the compiler may then continue to the next step and execute gates between qubits that have now become neighbors on the QPU. For the case that no candidates have been found to reduce the overall distance, a fallback strategy may be implemented to pick a random qubit pair to swap where one of the qubits is guaranteed to come closer to its partner when swapped (resulting in a +0 change in D). To see why this is necessary, the one-dimensional sequence of qubits $q_1, q_2, q_1, q_2$ may be considered, where qubits with the same index correspond to interaction pairs. The skilled person understands that for this configuration all three possible swap candidates have a +0 score even though at least one of the swaps needs to be implemented to resolve the interactions.

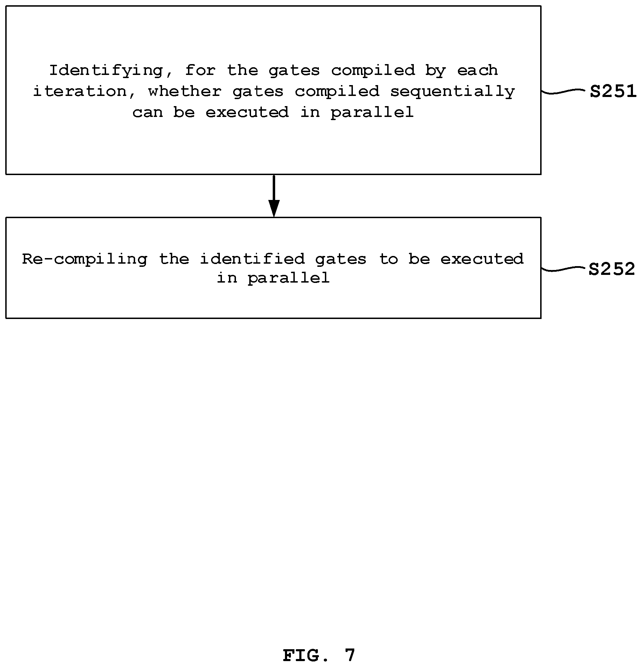

Fig. 7 shows a flow chart of further steps of shortening a circuit depth of the compiled quantum circuit. In more detail, Fig. 7 shows that step e) of shortening a circuit depth of the compiled quantum circuit may comprise: identifying, for the gates compiled by each iteration of steps a) to d), whether gates compiled sequentially can be executed in parallel (S251) and re-compiling the identified gates to be executed in parallel (S252).

These steps can also be understood as a push-back strategy in order to reduce the circuit depth. This can be done by analyzing whether a certain gate presently compiled at a certain position within the compiled quantum circuit may also be placed at an earlier position in the quantum circuit. For example, if a first and a second qubit are compiled to be swapped in a first layer of a quantum circuit and a third and a fourth qubit are compiled to be swapped in a second layer, it is clear that these two swaps can be performed at the same time since they are independent from each other. Hence, the second swap can be "pushed back" from the second layer to the first, thereby reducing the circuit depth.

In other words, a set of layers is maintained for every circuit for easy access. A layer is characterized by a graph where nodes correspond to physical qubits, and an edge exists if and only if two qubits are subject to a two-qubit gate interaction within that layer. In addition, each gate will virtually 'block' the qubits from being pushed back any further, which may be indicated by a binary node attribute. The edges may be labeled by either a swap or a non-swap mark. If two swap gates are inserted on the same subset of qubits sequentially, they will cancel each other out by a swap mark check. If the qubits involved in a certain gate are both 'free' in the previous layer, which can be checked by accessing the previous layer and the node attributes of the qubits, the gate may be pushed back. This process may be repeated until the previous layer is occupied in at least one of the involved qubits.

Fig. 8 shows an example of a method of compiling a quantum circuit applied to a specific instance of the QAOA for an optimization problem mapped onto nine logical qubits. Fig. 8 shows in the top row the problem graph for the nine logical qubits labelled 0 to 8 with the solid lines showing the interactions still to be routed. The seven instances of the problem graph show the seven layers of quantum circuit, wherein a layer of the quantum circuit may be considered as a set of quantum gates that can be executed in parallel. The middle row shows the allocation of the logical qubits onto physical qubits of the square grid quantum processing unit as well as the interactions at each step of the quantum circuit. The bottom row shows the compiled quantum circuit, where layers are separated by vertical dashed lines.

In the top row, each compiled interaction is removed from the problem graph. This is, because for the QAOA each interaction, that is, each gate, has to be applied only once due to the structure of the Hamiltonian $H_p$. Hence, any interaction mapped from the logical qubits to the physical qubits can be removed from the problem graph shown in the top row.

Thick solid and dashed lines in the middle row correspond to interaction gates, i.e., gates of the quantum circuit present before the qubit routing, while thin arrowed lines correspond to SWAP gates added to the quantum circuit as part of the qubit routing. A corresponding scheme is used in the bottom row, wherein vertical lines connecting two horizontal lines indicating two qubits with solid points at their end indicate two-qubit gates originating from the QAOA and lines connecting two horizontal lines with an "X" indicate the SWAP gates inserted as part of the compiling.

Fig. 8 shows that the first and the second layer do not involve any SWAP gates and moreover that each of the first two layers involves four gates, i.e., the maximum number of gates for a nine-qubit problem involving only two-qubit gates. This is due to the fact that the mapping between logical and physical qubits is chosen based on the solution obtained from the corresponding edge coloring problem, in particular by choosing the two colors with the largest edge lists. In other words, here the mapping between logical qubits and physical qubits has been chosen such that the highest number of gates can be performed in the first two layers without the need for any SWAP gates to be inserted at this stage.

When considering the first to third graphs of the top row, relating to the first to third layers, one sees that in the third graph all edges between qubit with subsequent label, i.e., 0 and 1, 1 and 2, ..., 7 and 8, have been removed as the corresponding gates have already been routed as shown in the bottom row.

In the subsequent four layers, one sees in particular in the bottom row how SWAP gates are inserted into the quantum circuit and also that the position of the labels in the middle row are swapped accordingly. At the same time, the problem graph is not affected by the SWAP gates. This illustrates how the step of compiling happens when going from the level of logical qubits (the top row) to the level of physical qubits (the middle row).

In the third layer, the gate between qubits 4 and 7 can be compiled without the need for any SWAP gates. Compared to the other gates yet to be compiled it thus has the smallest distance on a graph corresponding to the hardware connectivity restrictions of the quantum processing unit architecture and is thus part of the iteration subset, will be compiled directly and subsequently removed. Further, the SWAP of qubits 0 and 1 brings qubit 0 closer to qubit 2 and qubit 1 closer to qubit 5, hence is a positive swap in the sense discussed above. The additionally possible swap of qubits 2 and 3 would distance qubit 2 from qubit 0, thus is not a positive swap and is hence not carried out.

In the next iteration, shown at the fourth layer, the gate between qubits 0 and 2 as well as the gate between qubits 1 and 5 have a direct connectivity - similar to qubits 4 and 7 in the previous step. Hence, these gates are part of the iteration subset, compiled and subsequently removed. Similar to the previous step, swapping qubits 3 and 4 as well as qubits 7 and 8 brings qubits 0 and 3 and qubits 6 and 8 closer to each. The only qubit not subject to a gate in this iteration is qubit 5; as a single qubit, it cannot be swapped.

In the next iteration, shown at the fifth layer, qubits 0 and 3 as well as qubits 6 and 8, due to the swaps performed in the previous iteration, can be compiled and the swap of qubits 4 and 7 brings each closer to the qubit they interact with in the next (sixth) iteration: qubit 4 closer to qubit 8 and qubit 7 closer to qubit 2. Based on the same considerations, the swaps of qubits 0 and 3 and qubits 5 and 7 in the sixth layer allow the last three interactions to be compiled in the seventh layer and thus also the last three edges can be removed from the problem graph in the top row. Therefore, the entire quantum circuit has been compiled from the logical qubits of the top row to physical qubits of the bottom row while taking into account the restricted hardware connectivity of the quantum processing unit architecture, namely the square grid with only nearest-neighbor interaction as shown in the middle row.

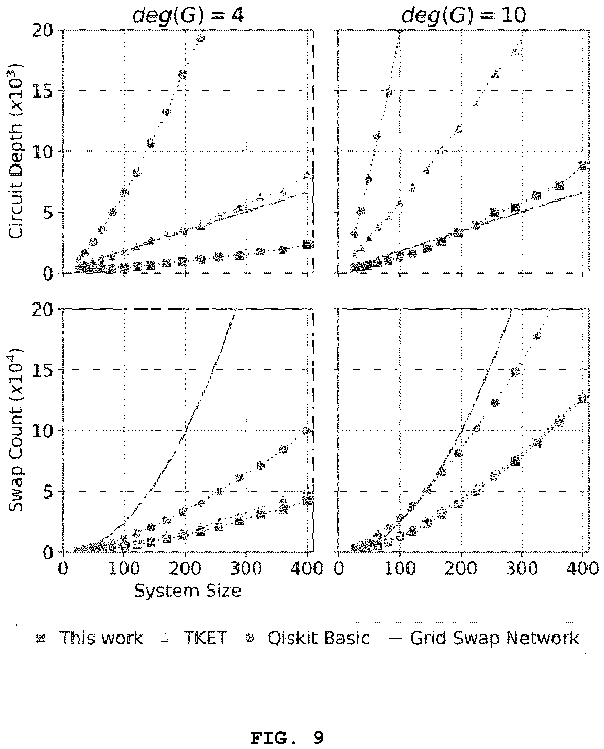

Fig. 9 shows a comparison of circuit depth (top) and number of swaps (bottom) of a method of compiling a quantum circuit according to the present disclosure with conventional approaches. The plots show these numbers as a function of the system size, i.e., the number of qubits. The quantum circuit routed corresponds to a QAOA problem with a $k$-regular graph with $k = 4$ (left) and $k = 10$ (right). A $k$-regular graph is a graph in which each vertex of the graph has $k$ neighbors or in other words each vertex has a degree of $k$.

The conventional approaches include the theoretical bound for a SWAP network developed by Weidenfeller et al., Quantum 6, 870 (2022) for a square grid network shown in the solid line and numerical results obtained using PyTket (TKET), version 1.10.0 shown with triangles as well as obtained using Qiskit Basic, version 0.39.4 shown with circles. Numerical results of the method according to the present disclosure are shown in squares.

The plots show that in terms of circuit depth, methods according to the present disclosure outperforms PyTket and Qiskit Basic and is comparable with the SWAP network and that in terms of SWAP count, i.e., the number of SWAP gates added to the quantum circuit, methods according to the present disclosure outperform the SWAP network and Qiskit Basic and are comparable with PyTket. In other words, methods according to the present disclosure find a very good balance between SWAP count and circuit depth while conventional solutions excel at best at one of the two.

A quantum compiler according to the present disclosure may be configured to implement any of the above discussed methods of compiling at least a part of a quantum circuit.

The quantum compiler may thus be considered as taking on various processing steps to execute a given QC on a QPU or quantum computer including, but not restrictive to, decomposing circuit gates into native quantum gates, resynthesizing the circuit according to commutation and rewriting rules and adding SWAP gates to comply with the hardware restrictions. The present qubit mapping/placement, for example performed by a mapping module of the compiler, and routing steps, for example performed by a routing module of the compiler, may be integrated as a subroutine into a compiler responsible also for other processing and execution steps.

Accordingly, once the physical qubits are initialized, the mapping module may provide the routing module with an initial set of gates to route. The routing module will then attempt to execute the gates and add SWAP gates to satisfy the connectivity constraints. The initial set of gates will be updated iteratively until all gates in the QC have been processed. Overall, the output of the compiler will be an executable quantum circuit logically equivalent to the input QC and compliant with a given QPU architecture.

As the methods according to the present disclosure can be understood as receiving, as input, at least a part of a quantum circuit comprising gates to be performed on logical qubits as well as a quantum processing unit architecture having physical qubits with restricted hardware connectivity, and providing, as output, a compiled version of at least part of the quantum circuit, it can be understood that this method can be implemented by a classical computer and does not require quantum hardware to be implemented.

Hence, the quantum compiler may be a classical computer comprising one or more processors or a programmable circuitry and one or more computer readable mediums including instructions that, when executed by one or more processors or the programmable circuitry cause them to be configured to receive, as input via an interface of the computer, at least a part of a quantum circuit comprising gates to be performed on logical qubits as well as a quantum processing unit architecture having physical qubits with restricted hardware connectivity, and configured to provide, as output via the interface, a compiled version of at least part of the quantum circuit, and further to carry out the processing steps of the methods discussed herein, i.e., process the input into the output. The one or more computer readable mediums of the quantum compiler may be configured to store the input and the output of the methods discussed herein as well as intermediate data generated during execution of the methods as well as the instructions for executing the methods.

This is in line with the method of compiling being a prerequisite for performing the quantum circuit on a quantum computer having restricted connectivity in a manner demonstrating the quantum advantage, i.e., the advantage of quantum computing over classical computing.

Accordingly, such a quantum compiler is not particularly limited and may be realized by a common computer equally as by a high-performance computing device, i.e., a classical supercomputer, or any computing device ranging between these two in size and/or performance.

A quantum computer according to the present disclosure may have a quantum processing unit, QPU, architecture having a plurality of physical qubits with restricted hardware connectivity and may be configured to execute a quantum circuit compiled according to any of the above discussed methods. The physical qubits may store logical qubits, and the hardware connectivity of the QPU is restricted because there is a limitation of the physical interaction connections between pairs of physical qubits that necessitates the introduction of SWAP gates. As discussed also elsewhere in this disclosure, the quantum computer is not particularly limited in its technical details and may be any quantum computer irrespective of the underlying technology and physical properties used to implement the qubits, the interaction between the qubits and the like. Moreover, the quantum computer according to the present disclosure is understood to also cover quantum computers that allow for alternative methods such as physically moving the physical qubits to overcome the restricted connectivity of the hardware. Further, within the present disclosure, "quantum computer" also includes fault tolerant quantum and quantum computer in which a logical qubit is composed of more than one logical qubits.

This quantum computer may, for example, be a superconducting quantum computer, i.e., a quantum computer based on superconducting circuits. In this case, the restricted hardware connectivity may be that the individual superconducting circuits can only implement quantum operation between adjacent, i.e., neighboring, superconducting circuits, meaning that the physical qubits are restricted to nearest-neighbor-interactions.

Once the methods of compiling at least a part of a quantum circuit discussed herein are executed taking into account this restricted hardware connectivity, the outputted compiled quantum circuit may be provided as an input to the quantum computer. The quantum computer may then carry out the operations corresponding to the gates of the compiled quantum circuit and then the result may be read out, i.e., the quantum computer may output the result of the quantum circuit.

In summary, the present disclosure provides methods of compiling at least a part of a quantum circuit in view of the hardware restrictions of the quantum processing unit architecture on which the quantum circuit is to be executed.

In view of currently available technology, this can be seen as a prerequisite for performing quantum computing showing a quantum advantage and accordingly these methods contribute to solving the problem of addressing specific technical constraints of the devices to be used such that its technical functionality can be exploited to its fullest.

Furthermore, with respect to conventional approaches to the qubit routing problem, the methods according to the present disclosure provide an efficient solution to the qubit routing problem that strikes an improved balance in simultaneously performing well in terms of added SWAP gates as well as circuit depth.

Further advantageously, the proposed solution is based on considerations that take into account QPU hardware connectivity restrictions but otherwise are independent from any details of the quantum hardware used and hence can be applied to any quantum processing unit architecture in an equal manner. Conventional solutions often rely on specific connectivity structures in the architecture and hence cannot be extended beyond this architecture in an equally efficient manner.

Particular advantages can be achieved when considering quantum circuits in which at least a part of the gates to be routed commute, such as for example in QAOA circuits, as herein the vast search space allows the methods according to the present invention to excel.

The present disclosure provides an efficient qubit routing strategy, in particular for QAOA problems, which strikes a balance in simultaneously performing well in terms of swap counts as well as total circuit depths. The most striking improvement compared to existing methods is found for relatively sparse graphs of the order of a few hundred qubits.

## Claims

1. A computer-implemented method of compiling at least a part of a quantum circuit comprising gates to be performed on logical qubits to a quantum processing unit architecture having physical qubits with restricted hardware connectivity, the method comprising:

   - identifying a mapping between the logical qubits and the physical qubits and compiling an initial subset of the gates of the quantum circuit; and
   - identifying a routing of at least the part of the quantum circuit that iteratively incorporates SWAP gates reducing a distance between an iteration subset of the gates.

2. The method according to claim 1, wherein the step of identifying the routing comprises:

   a) identifying as the iteration subset of gates a subset of gates of the quantum circuit that can be executed in parallel and that have not been compiled yet.

3. The method according to claim 1 or 2, wherein the step of identifying the routing comprises:
   b) compiling the gates of the iteration subset of gates that have a connectivity on the quantum processing unit architecture.

4. The method according to any one of claim 1 to 3, wherein the step of identifying the routing comprises:

   c) applying a swap strategy to the gates of the iteration subset of gates that do not have a connectivity on the quantum processing unit architecture by identifying SWAP gates that reduce the distance between the iteration subset of gates and;
   d) inserting the identified SWAP gates into the compiled gates of the iteration subset of gates.

5. The method according to any one of claims 2 to 4,
   wherein steps a) to d) are repeated until all gates of at least the part of the quantum circuit are compiled.

6. The method according to any one of claims 1 to 5,
   wherein the distance between the iteration subset of gates is a sum of shortest path lengths in the hardware connectivity between pairs of the physical qubits corresponding to the iteration subset of gates.

7. The method according to any one of claims 1 to 6,
   wherein identifying a mapping between the logical qubits and the physical qubits includes:

   - determining sets of concurrently executable gates of the quantum circuit by solving an edge coloring problem for a graph corresponding to the quantum circuit,
   - choosing two of the colors obtained from a solution to the edge coloring problem as well as edge lists corresponding to the two chosen colors, in particular wherein choosing the two colors comprises choosing the two colors with the largest edge lists,
   - creating a list comprising the elements of the two edge lists corresponding to the two chosen colors in an alternating manner, and
   - if the quantum processing unit architecture allows it, embedding the list into the quantum processing unit architecture, else removing elements from the list that cannot be embedded into the quantum processing unit architecture, thereby creating a modified list and embedding the modified list.

8. The method according to any one of claims 1 to 7,

wherein the initial subset of gates of the quantum circuit requires no SWAP gates to be executed.

9. The method according to any one of claims 1 to 8, dependent on claim 4, wherein in step c) the SWAP gates minimizing the distance between the subset of gates are identified.

10. The method according to claim 9, wherein step c) further comprises the steps of:

- identifying potential SWAP gates by identifying edges of a graph corresponding to the hardware connectivity restrictions of the quantum processing unit architecture containing at least one of the gates of the subset of gates that do not have a connectivity on the quantum processing unit architecture,
- constructing a SWAP gates graph consisting of the identified potential SWAP gates reducing the distance,
- finding a maximal matching or a maximum weight matching of the SWAP gates graph, and
- applying the SWAP gates according to the maximal matching or the maximum weight matching.

11. The method according to any one of claims 2 to 10, wherein the iteration subset of gates identified in step a) minimizes the distance on a graph corresponding to the hardware connectivity restrictions of the quantum processing unit architecture.

12. The method according to any one of claims 1 to 11, wherein the gates of at least the part of the quantum circuit commute with each other.

13. The method according to any one of claims 1 to 12, dependent on claims 2 to 4, wherein identifying the routing further includes a step e) of shortening a circuit depth of the compiled quantum circuit, the step e) comprising the steps of:

- identifying, for the gates compiled by each iteration of steps a) to d), whether gates compiled sequentially can be executed in parallel, and
- re-compiling the identified gates to be executed in parallel.

14. A quantum compiler, configured to implement the method of any one of claims 1 to 13.

15. A quantum computer having a quantum processing unit architecture having physical qubits with restricted hardware connectivity, the quantum computer configured to execute a quantum circuit compiled according to the method of any one of claims 1 to 14.

Identifying a mapping between logical qubits and physical qubits and compiling an initial subset of gates of the quantum circuit ⟋ S100

Identifying a routing of at least part of the quantum circuit that iteratively incorporates SWAP gates reducing a distance between an iteration subset of the gates ⟋ S200

**FIG. 1**

Identifying as the iteration subset of gates a subset of gates of the quantum circuit that can be executed in parallel and that have not been compiled yet ⟋S210

Compiling the gates of the iteration subset of gates that have a connectivity on the quantum processing unit architecture ⟋S220

Applying a swap strategy to the gates of the iteration subset of gates that do not have a connectivity on the quantum processing unit architecture by identifying SWAP gates that reduce the distance between the iteration subset of gates ⟋S230

Inserting the identified SWAP gates into the compiled gates of the iteration subset of gates ⟋S240

Shortening a circuit depth of the compiled quantum circuit ⟋S250

FIG. 2

Determining sets of concurrently executable gates of the quantum circuit by solving an edge coloring problem for the graph corresponding to the quantum circuit — S110

Choosing two of the colors obtained from a solution to the edge coloring problem and edge lists corresponding to the two chosen colors — S120

Creating a list comprising the elements of the two edge lists corresponding to the two chosen colors in an alternating manner — S130

S142a

Embedding the list into the quantum processing unit architecture

S141

Removing elements from the list that cannot be embedded into the quantum processing unit architecture

S142b

Embedding the modified list

FIG. 3

FIG. 4

Identifying potential SWAP gates by identifying edges of a graph corresponding to the hardware connectivity restrictions of the quantum processing unit architecture containing at least one of the gates of the subset of gates that do not have a connectivity on the quantum processing unit architecture ⌐S231

Constructing a SWAP gates graph consisting of the identified potential SWAP gates reducing the distance ⌐S232

Finding a maximal matching of the SWAP gates graph ⌐S233

Applying the SWAP gates according to the maximal matching ⌐S234

FIG. 5

FIG. 6

Identifying, for the gates compiled by each iteration, whether gates compiled sequentially can be executed in parallel — S251

Re-compiling the identified gates to be executed in parallel — S252

FIG. 7

FIG. 8

FIG. 9

Europäisches
Patentamt

European
Patent Office

Office européen
des brevets

# EUROPEAN SEARCH REPORT

**Application Number**

EP 24 21 1742

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CYNTHIA CHEN ET AL: "Recursive Methods for Synthesizing Permutations on Limited-Connectivity Quantum Computers", ARXIV.ORG, CORNELL UNIVERSITY LIBRARY, 201 OLIN LIBRARY CORNELL UNIVERSITY ITHACA, NY 14853, 2 December 2022 (2022-12-02), XP091385272, * the whole document * | 1-15 | INV. G06N10/20 G06N10/80 |
| X | HUA FEI ET AL: "CaQR: A Compiler-Assisted Approach for Qubit Reuse through Dynamic Circuit", ADJUNCT PROCEEDINGS OF THE 15TH INTERNATIONAL CONFERENCE ON AUTOMOTIVE USER INTERFACES AND INTERACTIVE VEHICULAR APPLICATIONS, ACMPUB27, NEW YORK, NY, USA, 25 March 2023 (2023-03-25), pages 59-71, XP059421624, DOI: 10.1145/3582016.3582030 ISBN: 979-8-4007-0116-0 * the whole document * | 1-15 | |
| X | SHI YUNONG ET AL: "Optimized Compilation of Aggregated Instructions for Realistic Quantum Computers", PROCEEDINGS OF THE 19TH WORKSHOP ON MOBILITY IN THE EVOLVING INTERNET ARCHITECTURE, ACMPUB27, NEW YORK, NY, USA, 4 April 2019 (2019-04-04), pages 1031-1044, XP059838066, DOI: 10.1145/3297858.3304018 ISBN: 979-8-4007-1248-7 * the whole document * | 1-15 | **TECHNICAL FIELDS SEARCHED (IPC)**<br><br>G06N |

The present search report has been drawn up for all claims

| Place of search | Date of completion of the search | Examiner |
|---|---|---|
| The Hague | 8 April 2025 | Papadakis, Georgios |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SIRAICHI et al.** Qubit allocation as a combination of subgraph isomorphism and token swapping. *Proceedings of the ACM on Programming Languages*, vol. 3 (OOPSLA), 1-29
- **LI et al.** Tackling the Qubit Mapping Problem for NISQ-Era Quantum Devices. *arXiv: 1809.02573*
- **WEIDENFELLER et al.** Scaling of the quantum approximate optimization algorithm on superconducting qubit based hardware. *arXiv: 2202.03459*
- **WEIDENFELLER et al.** *Quantum*, 2022, vol. 6, 870